# EUROPÄISCHE PATENTANMELDUNG

(11) **EP 3 335 919 A1**
(43) Veröffentlichungstag der Anmeldung: **20.06.2018**
(21) Anmeldenummer: 17207006.2
(22) Anmeldetag: 13.12.2017
(51) Int. Cl.: B60H 1/00, F24F 120/12

(54) **OMNIBUS**

(30) Priorität: 14.12.2016 DE 102016124305
(71) Anmelder: AURORA Konrad G. Schulz GmbH & Co. KG, 69427 Mudau (DE)
(72) Erfinder: Wolf, Hannes, 74722 Buchen (DE)
(74) Vertreter: Baronetzky, Klaus

(57) **Zusammenfassung**

Die Erfindung betrifft einen Omnibus mit einem Fahrerbereich, mindestens einem Fahrgastraum und einer Klimaanlage. Der Fahrgastraum weist mindestens zwei Zonen auf. Die Klimaanlage weist mindestens je ein Modul für jede Zone auf. Der Omnibus weist eine Steuervorrichtung, eine Anzeigevorrichtung und eine Erfassungsvorrichtung auf, die die Anzahl von Fahrgästen, welche sich in jeweiliger Zone befinden, erfasst. Basierend auf der erfassten Anzahl von Fahrgästen steuert die Steuervorrichtung die Klimaanlage und die Anzeigevorrichtung derart, dass die von den Fahrgästen belegte Zone bzw. belegten Zonen je durch ein Modul der Klimaanlage klimatisiert wird bzw. werden und die klimatisierte Zone bzw. klimatisierten Zonen auf der Anzeigevorrichtung angezeigt wird bzw. werden.

## Beschreibung

Die Erfindung betrifft einen Omnibus gemäß dem Oberbegriff von Anspruch 1.

Omnibusse bzw. Stadtbusse weisen heutzutage in der Regel zwei Zonen auf, in denen sich Personen befinden, nämlich einen Fahrerbereich und einen Fahrgastraum. Die beiden Zonen können separat klimatisiert werden.

An Bushaltestellen steigen Fahrgäste ein und/oder aus. Falls alle Passagiere an einer Bushaltestelle ausgestiegen sind, wird der Fahrgastraum trotzdem weiter klimatisiert, was energetisch nicht effizient ist. Auch wenn nur ein oder zwei Fahrgäste im Bus sind, muss der ganze Fahrgastraum weiter beheizt oder gekühlt werden.

Dies ist bei diselbetriebenen Omnibussen zwar unvorteilhaft, aber nicht kritisch.

Für Vollelektrobusse ist dies aber nicht akzeptabel. Die Ineffizienz der Energieausnutzung führt zu einer geringeren Reichweite der Vollelektrobusse oder zu höheren Kosten für Batterien. Die Lebensdauer der Batterien wird wesentlich von der Anzahl der Ladezyklen bestimmt. Mit einem ineffizienten Energiemanagement werden die Ladezyklen erhöht und wird die Lebensdauer der Batterien verkürzt.

Fahrer können theoretisch zu jeder Zeit die Klimatisierung des Fahrgastraums steuern. Dies sollten sie aber nicht. Zu häufige Beobachtungen der Situation im Fahrgastraum und Steuerungen der dortigen Klimatisierung würden den Fahrer vom Fahren ablenken, was den Omnibus und alle Passagiere in Gahr bringen könnte.

Es wurde vorgeschlagen, den Fahrgastraum weiter in z.B. vier Zonen zu unterteilen und diese je seperat zu klimatisieren, so dass die vorstehende Ineffizienz der Energieausnutzung in gewissem Maße verbessert wird. Hierzu sind vier Module z.B. im Dachkanal des Omnibusses vorgesehen, die die Zuluft oder Umluft erwärmen. Jedes Modul besteht mindestens aus einem Gebläse und einem Wärmetauscher, kann aber auch einen oder mehrere Verdampfer mit aufnehmen. Jedes Modul ist, insbesondere im Hinblick auf die durch es gesteuerte Luftmenge und/oder die Zulufttemperatur, separat zu regeln.

Die Druckschrift DE 11 2012 004 769 T5 offenbart ein Verfahren und Systeme für ein vollständiges Fahrzeugökosystem. Das dortige Fahrzeugsystem kann automatisch bestimmen, dass sich eine Person in einem Fahrzeug befindet, und automatisch die Person identifizieren. Der dortige Fahrgastraum ist in Bereichen bzw. Zonen aufgeteilt, die je in kleineren Zonen weiter aufgeteilt sind. Es sind auch Module vorgesehen, die Funkionen wie z.B. Klimaanlagenbetrieb aufweisen.

Die Druckschrift DE 11 2012 004 767 T5 offenbart ebenfalls ein Verfahren und Systeme für ein vollständiges Fahrzeugökosystem. In einer dortigen Ausführungsform kann ein Fahrzeug eine oder mehrere Zonen umfassen. Es kann eine oder mehrere Personen auf der Basis des Gewichts, der Temperatur, der Wärmesignatur, der Höhe, der Gesichtsstruktur, der Stimme und/oder Kombinationen davon von mindestens einer der einen oder mehreren Personen erkannt werden. Das dortige Gestenerkennungssystem kann die Temperatur der Fahrzeugklimaanlage für eine oder mehrere Zonen des Fahrzeugs verändern.

Die Druckschrift DE 10 2014 212 465 A1 betrifft eine Vorrichtung zur Klimatisierung, insbesondere Befeuchtung und Entfeuchtung von Luft, insbesondere zur Anordnung in einem Luftweg einer Klimatisierungseinrichtung, für einen Insassenraum eines Fahrzeugs. Die dortige Klimaanlage kann individuell für jede Zone eines Mehrzonen-Fahrgastraums eingestellt werden. Über die Sensoren der dortigen Vorrichtung ist zu erfassen, ob sich eine Person im Insassenraum des Fahrzeugs befindet.

Die oben als Beispiel angeführten Verfahren und Vorrichtungen je mit einer Mehrzonen-Auslegung im Fahrgastraum erlauben zwar eine feinere, lokale Klimatisierung des Fahrgastraums, haben aber den Nachteil, dass bei Omnibussen angesichts der Situation, dass der Ein- und Ausstieg von Fahrgästen sehr häufig auftritt, die aktuelle Klimatisierung jeder Zone nicht flexibel genug ist.

Daher liegt der Erfindung die Aufgabe zugrunde, einen Omnibus gemäß dem Oberbegriff von Anspruch 1 zu schaffen, welcher eine flexiblere und energieeffizientere Klimatisierung des Fahrgastraums erlaubt.

Diese Aufgabe wird erfindungsgemäß durch Anspruch 1 gelöst. Vorteilhafte Weiterbildungen ergeben sich aus den Unteransprüchen.

Erfindungsgemäß wird durch eine Erfassungsvorrichtung des Omnibusses die Anzahl von Fahrgästen, welche sich in jeweiliger Zone des Fahrgastraums befinden, erfasst. Basierend auf der erfassten Anzahl von Fahrgästen steuert eine Steuervorrichtung des Omnibusses eine Klimaanlage dieses und eine Anzeigevorrichtung dieses derart, dass die von den Fahrgästen belegte Zone bzw. belegten Zonen je durch ein Modul der Klimaanlage klimatisiert wird bzw. werden und die klimatisierte Zone bzw. klimatisierten Zonen auf der Anzeigevorrichtung angezeigt wird bzw. werden.

Dies gewährleistet unter anderem, dass nur die belegte Zonen bzw. belegten Zonen klimatisiert wird bzw. werden. Die nicht belegten Zonen werden nicht beheizt oder gekühlt. Falls alle in einer Zone befindlichen Fahrgäste ausgestiegen oder zu anderen Zonen gegangen sind, wird diese Zone erfindungsgemäß nicht mehr klimatisiert. Dadurch wird das Energiemanagement verbessert.

Durch die Anzeige der klimatisierten Zonen auf der Anzeigevorrichtung werden erfindungsgemäß Fahrgäste, insbesondere die gerade eingestiegenen Fahrgäste, informiert, und ihr wird dadurch ein Hinweis gegeben, zu welchen Zonen hin sie gehen sollten.

In einer bevorzugten Ausführungsform ist es vorgesehen, dass die Anzeigevorrichtung in Form mindestens eines Monitors ausgebildet ist, der z.B. an einem Eingang des Omnibusses montiert wird. Auf dem Monitor sind die Zonen des Fahrgastraums und ihre räumliche Anordnung durch z.B. nebeneinander liegende Quadrate dargestellt, und die klimatisierten Zonen werden in den entsprechenden Quadraten mit der roten Farbe markiert. Auf dem Monitor wird in diesem Fall eine zusätzliche Erklärung angezeigt, die z.B. das Folgende sein kann: "Passagiere sollten sich bitte in den roten Zonen aufhalten, die jetzt klimatisiert werden".

In einer weiteren bevorzugten Ausführungsform ist es vorgesehen, dass die Anzeigevorrichtung benachbart hinter dem Fahrerbereich und ggf. eine zusätzliche Anzeigevorrichtung im Zentrum des Fahrgastraums vor Fahrgästen vorgehängt ist, so dass alle Fahrgäste die auf der Anzeigevorrichtung angezeigten Informationen klar sehen können.

Es kann ferner angezeigt werden, welche Energieeinsparungen dadurch erreicht würden. Damit nimmt der einzelne Passagier zur Kenntnis, welchen Beitrag er leisten würde, wenn er die temperierten Zonen "füllen" würde.

Dadurch wird gewährleistet, dass ein möglichst großes Verhältnis der Energieausbeute zur Anzahl der Fahrgäste erreicht werden kann.

Selbstverständlich können die Fahrgäste aber auch frei auswählen, sich in beliebigen Zonen aufzuhalten.

In einer weiteren bevorzugten Ausführungsform ist es vorgesehen, dass die nicht klima• tisierten Zonen auf der Anzeigevorrichtung angezeigt werden, welche auf der Anzeigevorrichtung von den klimatisierten Zonen unterscheidbar sind. Dadurch ist es für die Fahrgäste ersichtlich, wie die Aufteilung der Zonen in klimatisierte und nicht klimatisierte Zonen und die räumliche Anordnung dieser aussieht.

Jede Zone des Fahrgastraums hat eine Belegungsrate zwischen null und 100 % entsprechend der Anzahl der in dieser Zone befindlichen Fahrgäste. Die Belegungsrate wird basierend auf der erfassten Anzahl der in dieser Zone befindlichen Fahrgäste durch die Steuervorrichtung berechnet.

Wenn sich kein Passagier in einer Zone aufhält, beträgt die Belegungsrate null. Wenn die Anzahl von Passagieren, die sich in dieser Zone aufhalten, einen vorgegebenen maximalen Wert beträgt oder übersteigt, beträgt die Belegungsrate dieser Zone 100%. Die Anzahl der in dieser Zone befindlichen Fahrgäste zwischen null und dem vorgegebenen maximalen Wert entspricht einer durch die Steuervorrichtung berechneten relativen Belegungsrate dieser Zone.

In einer weiteren bevorzugten Ausführungsform ist es vorgesehen, dass beim Übersteigen der Belegungsrate einer ersten Zone von z.B. 30 %, insbesondere von 50%, durch die Steuervorrichtung und die Klimaanlage eine zweite Zone, die nicht belegt ist, klimatisiert wird. Bevorzugt wird die zweite Zone mit einer im Vergleich zu einer Soll-Leistung der Klimaanlage reduzierten Leistung klimatisiert.

Mit dieser Ausgestaltung wird der Komfort von Passagieren berücksichtigt. Falls die Belegungsrate der ersten Zone relativ groß ist, bedeutet dies, dass bereits ein relativ großer Anteil von Fahrgästen in der ersten Zone besteht. Die Fahrgäste in der ersten Zone könnten sich dann ggf. beengt fühlen.

In diesem Fall wird die zweite Zone, die nicht belegt ist, beheizt oder gekühlt, was die Fahrgäste in der ersten Zone motiviert, sich komforthalber zur zweiten Zone zu bewegen.

Alternativ wird den in der ersten Zone befindlichen Passagieren empfohlen, insbesondere durch die Anzeigevorrichtung, dass sie komforthalber zu den anderen bereits belegten Zonen, die bereits klimatisiert werden und eine relativ geringere Belegungsrate aufweisen, gehen können.

In einer weiteren bevorzugten Ausführungsform ist es vorgesehen, dass durch die Steuervorrichtung die Echtzeit-Leistung jedes Moduls der Klimaanlage positiv korreliert mit der erfassten Anzahl von Fahrgästen in jeder Zone änderbar ist. Je weniger die in einer Zone erfassten Personen bestehen, desto niedriger wird die Leistung des entsprechende Moduls der Klimaanlage geregelt, und umgekehrt bis auf die maximale Leistung des Moduls.

In einer weiteren bevorzugten Ausführungsform ist es vorgesehen, dass auf der Anzeigevorrichtung die zweite Zone unterscheidbar von den belegten, klimatisierten Zonen und den nicht klimatisierten Zonen angezeigt wird.

Dadurch wird den Fahrgästen, insbesondere den Fahrgästen in der ersten Zone und den gerade eingestiegenen Fahrgästen, ein Hinweis gegeben, dass es für sie empfehlenswert ist, zur zweiten Zone zu gehen.

In einer weiteren bevorzugten Ausführungsform ist es vorgesehen, dass auf der Anzeigevorrichtung die zweite Zone wie eine belegte, klimatisierte Zone angezeigt wird. Die Passagiere können durch eine einfache Inaugenscheinnahme aller als belegt und klimatisiert bezeichneten Zonen zur Kenntnis nehmen, in welcher dieser Zonen sich keine Person oder die wenigsten Personen befinden.

In einer weiteren bevorzugten Ausführungsform ist es vorgesehen, dass beim Belegen der zweiten Zone auf der Anzeigevorrichtung die zweite Zone als belegte, klimatisierte Zone angezeigt wird. Dementsprechend klimatisiert die Klimaanlage die zweite Zone mit ihrer Soll-Leistung.

In einer weiteren bevorzugten Ausführungsform ist es vorgesehen, dass, falls die Belegungsrate einer der Zonen auf null reduziert wird, die Steuervorrichtung die Klimaanlage steuert, das der Zone entsprechende Modul abzuschalten. Entsprechend wird auf der Anzeigevorrichtung die Zone als nicht klimatisiert angezeigt.

Dadurch wird erfindungsgemäß die Energieeinsparung deutlich verbessert. Die Abschaltung des Moduls der Klimaanlage, sowie die Wiedereinschaltung bei der Wiederbelegung der Zone, findet erfindungsgemäß automatisch statt. Der Fahrer des Omnibusses braucht sich nicht mehr auf die Steuerung der Klimatisierung des Busses zu konzentrieren. Daher wird ferner erfindungsgemäß das Sicherheitsniveau des Busses verbessert.

In einer weiteren bevorzugten Ausführungsform ist es vorgesehen, dass die Steuervorrichtung die Ist-Anzahl der in den Zonen befindlichen Fahrgäste basierend auf einer innerhalb z.B. 10 Sekunden, insbesondere innerhalb 5 Sekunden, bevorzugt innerhalb 3 Sekunden, durchschnittlichen erfassten Anzahl der in den Zonen befindlichen Fahrgäste bestimmt.

Beim Einsteigen in den Bus und/oder Aussteigen aus dem Bus bewegen sich Fahrgäste häufig durch die Zonen des Busses hindurch. Die Bestimmung der erfassten Anzahl der in einer Zone befindlichen Fahrgäste sollte somit basierend auf den in einer relativ langen Zeitdauer erfassten Daten vorgenommen werden, um anschließend eine unnötig häufige Änderung der Steuerung der Klimatisierung des Busses zu vermeiden.

In einer weiteren bevorzugten Ausführungsform ist es vorgesehen, dass der Omnibus ein Kommunikationsgerät, insbesondere ein Mobiltelefon-Netz-Modul, aufweist. Durch das Kommunikationsgerät ist der Omnibus mit dem Internet verbunden, und die Informationen bezüglich der Anzahl der im Omnibus und/oder in den einzelnen Zonen des Omnibusses befindlichen Fahrgäste sind über das Internet zugreifbar.

Das Busunternehmer kann erfindungsgemäß solche Informationen zum Flottenmanagement ausnutzen. Zum Beispiel kann sich das Busunternehmer entscheiden, ob in Zukunft mehr oder weniger Omnibusse für eine einzelne Linie entsandt werden sollten, oder, was für Optimierungen der Busroute für einen effizienteren Transport von Passagieren vorzunehmen sind.

Ferner kann einem Fahrgast z.B. durch eine App auf seinem Mobiltelefon empfohlen werden, eine Linie mit einer derzeit geringeren Belegung zu nutzen. Ihm wird auch angezeigt, welche Energieeinsparungen dadurch erreicht werden, dass die Busse des Verkehrsbetriebes zonenweise, aber nicht als "Ganzes" klimatisiert werden.

In einer weiteren bevorzugten Ausführungsform ist es vorgesehen, dass die Erfassungsvorrichtung zur Erfassung der Anzahl von Fahrgästen Sensoren und/oder Lichtschranken, insbesondere unsichtbare Lichtschranken, umfasst. Die Sensoren können beispielsweise in/an den Sitzen und/oder am Dach und/oder am Boden und/oder an den Seitenfestern und/oder an den Armlehnen des Omnibusses angeordnet sein.

In einer weiteren bevorzugten Ausführungsform ist es vorgesehen, dass die Anzeigevorrichtung LEDs und/oder Lichtbänder mit unterschiedlichen Farben aufweist. Die LEDs und/oder Lichtbänder sind benachbart an den Zonen des Fahrgastraums angeordnet und leuchten diese Zonen aus. Beispielsweise sind die temperierten Zonen rot und die nicht temperierten Zonen blau ausgeleuchtet. Fahrgäste können sich entscheiden, in welche Zone sie sich setzen.

Die Klimatisierung des erfindungsgemäßen Omnibusses betrifft das Heizen bzw. Erwärmen, das Abkühlen und das Belüften des Innenraums des Omnibusses. Das Heizen bzw. Erwärmen und das Abkühlen des Innenraums des Omnibusses sollte als die Klimatisierung des erfindungsgemäßen Omnibusses verstanden werden, bei der das Belüften des Innenraums des Omnibusses beliebig mit stattfinden kann.

In einer weiteren bevorzugten Ausführungsform ist es vorgesehen, dass der Fahrgastraum mindestens vier Zonen, insbesondere acht Zonen, aufweist und die nach dem Fahrerbereich befindliche Zone stets auf eine Soll-Temperatur klimatisiert wird, mit der im Allgemeinen sich die Fahrgäste komfortabel fühlen.

Ein Vorteil dieser Ausführungsform, in der mehr Zonen im Fahrgastraum vorgesehen sind, besteht darin, dass die Austauschflächen der nach dem Fahrerbereich befindlichen Zone mit den benachbarten Zonen, deren Ist-Temperatur von der Soll-Temperatur abweicht, im Vergleich zu denjenigen bei den Ausführungsformen mit wenigen Zonen geringer sein können.

Mit den geringen "offenen" Flächen, die sich zwischen Zonen befinden, können erfindungsgemäß ungewünschte Luftkonvektionen zwischen Zonen vermindert werden, was zur Energieeinsparung führt.

Außerdem sind mit mehr kleinen Zonen unnötige großflächige Klimatisierungen zu vermeiden. Beispielsweise tritt ein Fahrgast in eine Zone ein, die dann zur Klimatisierung bereit ist. Bei einer relativ großen Zone müsste nunmehr die ganze Zone vollständig klimatisiert werden. Demgegenüber ist für den Fahrgast in einer erfindungsgemäßen kleinen Zone weniger Leistung erforderlich, um diese Zone zu klimatisieren.

Darüber hinaus ist erfindungsgemäß die Leistungsanforderung an die Module der Klimaanlage niedrig, da in dieser Ausführungsform die jeweiligen Module nur für kleinen Zonen zuständig sein müssen.

Weitere Vorteile, Einzelheiten und Merkmale ergeben sich aus der nachfolgenden Beschreibung von Ausführungsbeispielen der Erfindung anhand der Zeichnungen.

Es zeigen:
- Fig. 1: eine schematisch dargestellte Ausführungsform des erfindungsgemäßen Omnibusses in Draufsicht;
- Fig. 2: die Ausführungsform des erfindungsgemäßen Omnibusses gemäß Fig. 1 in einem weiteren Zustand;
- Fig. 3: eine weitere schematisch dargestellte Ausführungsform des erfindungsgemäßen Omnibusses in Draufsicht;
- Fig. 4(a): eine weitere schematisch dargestellte Ausführungsform des erfindungsgemäßen Omnibusses in Seitenansicht; und
- Fig. 4(b): die Ausführungsform des erfindungsgemäßen Omnibusses gemäß Fig. 4(a) in Rückansicht.

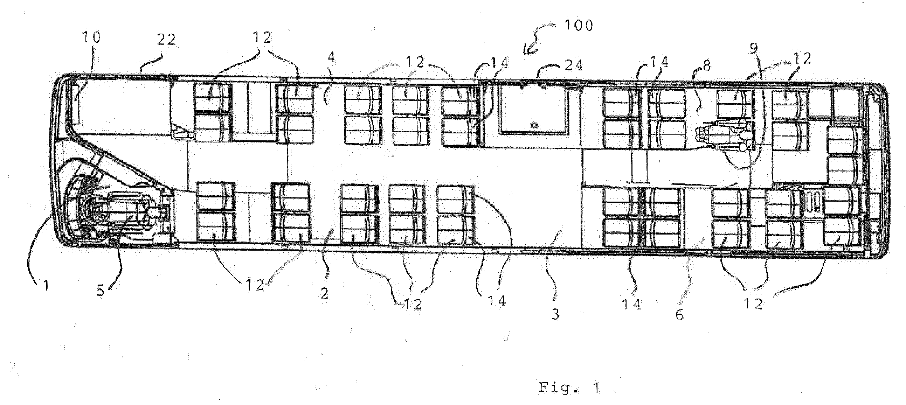

Die in Fig. 1 dargestellte Ausführungsform des erfindungsgemäßen Omnibusses 100 weist einen Fahrerbereich 1 und einen Fahrgastraum 3 auf. Der Fahrgastraum 3 weist gemäß der dargestellten Ausführungsform vier Zonen 2, 4, 6 und 8 auf. Der Omnibus 100 weist zudem zwei Türen 22 und 24 auf, wobei die Tür 22 für das Einsteigen in den Omnibus 100 und die Tür 24 für das Aussteigen aus dem Omnibus 100 bestimmt ist.

In dem Omnibus 100 sind eine Vielzahl von Bussitzen 12 verteilt angeordnet. Ein Monitor 10 ist an der Einstiegstür 22 derart angeordnet, dass sowohl die eingestiegenen Fahrgäste, als auch alle anderen in den Zonen 2, 4, 6, 8 befindlichen Fahrgäste die auf dem Monitor angezeigten Informationen ohne Problem sehen können.

In jeder Zone 22, 24, 26, 28, und zwar an mindestens einem der Bussitze 12 jeder Zone 22, 24, 26, 28, ist mindestens ein Sensor 14 angeordnet, der die Anzahl von Fahrgästen, welche sich in jeweiliger Zone befinden, erfassen kann.

Wenn durch den Sensor 14 kein Passagier im erfindungsgemäßen Omnibus 100 erfasst wird, wird lediglich der Fahrerbereich 1 für den Fahrer 5 klimatisiert, während erfindungsgemäß zur Energieeinsparung die Steuervorrichtung des Omnibusses 100 die Klimaanlage steuert, die vier Module je für die Zonen 2, 4, 6, 8 des Fahrgastraums mindestens teilweise abzuschalten.

An einer Bushaltestelle steigt ein erster Fahrgast 9 in den Omnibus 100 ein. Er geht durch den Fahrgastraum 3 und hält sich schließlich in der Zone 8 auf. In der dargestellten Ausführungsform wird die Ist-Anzahl der in den Zonen 2, 4, 6, 8 befindlichen Fahrgäste basierend auf einer innerhalb 5 Sekunden durchschnittlichen durch den Sensor 14 erfassten Anzahl der in den Zonen 2, 4, 6, 8 befindlichen Fahrgäste bestimmt. Da der erste Fahrgast 9 nach dem Einstieg lediglich an den Zonen 2, 4, 6 vorbeigegangen ist, ist die ausgerechnete durchschnittliche Anzahl der in diesen Zonen befindlichen Fahrgäste wesentlich geringer als eins. Dementsprechend sieht die Steuervorrichtung des Omnibusses 100 diese Situation in den Zonen 2, 4, 6 als keinen Fahrgast darin an. Somit sind in diesem Fall die Module der Klimaanlage für die Zonen 2, 4, 6 immer noch ausgeschaltet.

Im Vergleich dazu beträgt z.B. 6 Sekunden nach dem Eintreten des ersten Fahrgasts in die Zone 8 die ausgerechnete Anzahl der in der Zone 8 befindlichen Fahrgäste eins. Also wird ein in der Zone 8 befindlicher Fahrgast 9 bestätigt. Ab diesem Zeitpunkt wird durch das Modul der Klimaanlage für die Zone 8 diese klimatisiert. Dementsprechend wird auf dem Monitor 10 die Zone 8 als klimatisiert angezeigt.

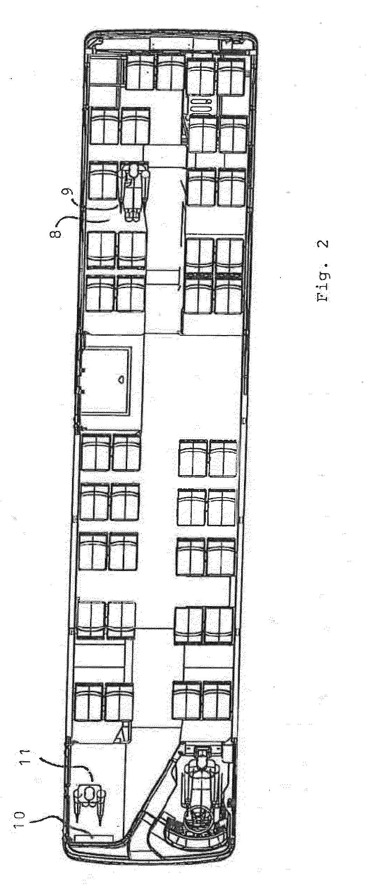

An z.B. der nächsten Bushaltestelle steigt ein zweiter Fahrgast 11 in den Omnibus 100 ein (siehe Fig. 2). Nach dem Einstieg nimmt er erfindungsgemäß via den Monitor 10 zur Kenntnis, dass momentan nur die Zone 8 klimatisiert wird, und, wenn er gleich auch in der Zone 8 bleibt, unnötiger Energieverbrauch vermieden wird und er dadurch zudem einen Beitrag zur Entlastung der Umwelt leisten würde.

Falls der zweite Fahrgast 11 dem Hinweis des Monitors 10 folgt und sich entscheidet, in der Zone 8 zu bleiben, wird erfindungsgemäß die Effizienz der Klimatisierung im Fahrgastraum 3 verbessert.

Jede Zone 2, 4, 6, 8 des Fahrgastraums 3 hat eine Belegungsrate zwischen null und 100 %, entsprechend der Anzahl der in dieser Zone befindlichen Fahrgäste. Die Belegungsrate wird basierend auf der durch den Sensor 14 erfassten Anzahl der in dieser Zone befindlichen Fahrgäste durch die Steuervorrichtung berechnet.

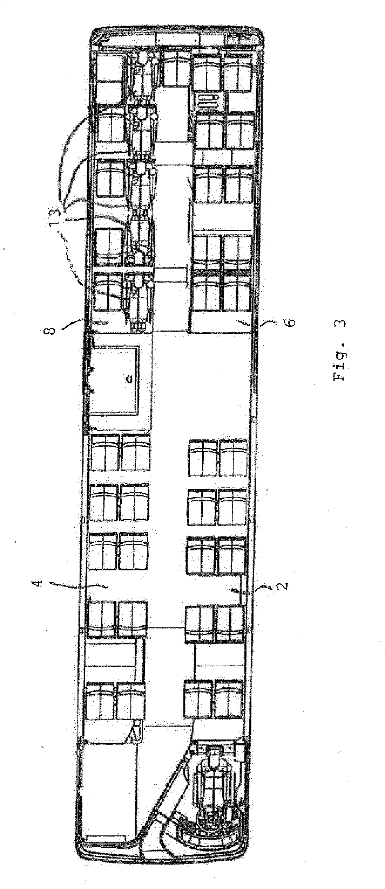

Gemäß der in Fig. 3 dargestellten Ausführungsform befinden sich bereits fünf Passagiere in der Zone 8, was eine relativ hohe Belegungsrate der Zone 8 zeigt. Es wird dann erfindungsgemäß die Zone 6, die noch nicht belegt ist, beheizt oder gekühlt, damit die Fahrgäste in der Zone 8 und/oder die später einzusteigenden Fahrgäste motiviert werden, sich komforthalber zu der Zone 6 zu bewegen.

Die Zone 6 befindet sich im Vergleich zu den Zonen 2, 4 näher an der Zone 8. Während der Klimatisierung der Zone 8 breitet sich die beheizte oder gekühlte Luft der Zone 8 mehr in die Zone 6 aus als in die Zonen 2 und 4. Erfindungsgemäß wird in diesem Fall gezielt die Zone 6 nach der Zone 8 klimatisiert, um weniger Energie für die Klimatisierung zu verbrauchen.

In dieser Ausführungsform weist der erfindungsgemäße Omnibus 100 ein nicht in Fig. 3 dargestelltes Kommunikationsgerät auf. Durch das Kommunikationsgerät ist der Omnibus 100 mit dem Internet verbunden, und die Informationen bezüglich der Anzahl der im Omnibus 100 und/oder in den einzelnen Zonen 2, 4, 6, 8 des Omnibusses 100 befindlichen Fahrgäste 13 sind über das Internet zugreifbar.

Das Busunternehmer kann erfindungsgemäß solche Informationen zum Flottenmanagement ausnutzen. Ferner kann erfindungsgemäß einem Fahrgast z.B. durch eine App auf seinem Mobiltelefon empfohlen werden, eine Buslinie mit einer derzeit geringeren Belegung zu nutzen. Ihm wird auch angezeigt, welche Energieeinsparungen dadurch erreicht werden, dass die Busse des Verkehrsbetriebes zonenweise, aber nicht als "Ganzes" klimatisiert werden.

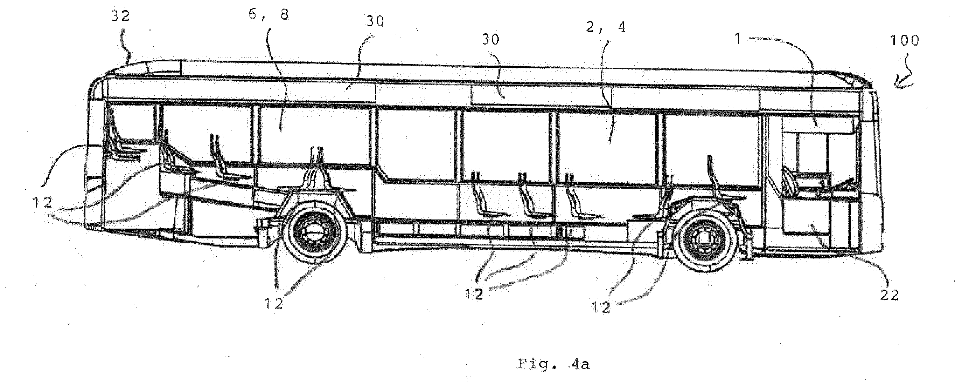

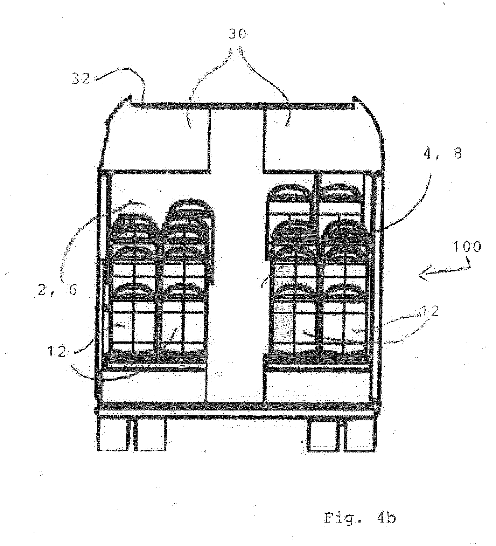

In der gemäß den Fig. 4(a) und 4(b) dargestellten Ausführungsform sind ebenfalls vier Zonen 2, 4, 6, 8 wie bei der Ausführungsform gemäß Fig. 1 vorgesehen. Zudem sind zwischen den benachbart angeordneten Zonen 2, 4, 6, 8 vier erfindungsgemäße Zonentrennwände 30 vorgesehen, die z.B. aus Plexiglas bestehen und unter dem Busdach 32 an diesem verteilt angeordnet sind. Die Zonentrennwände 30 funktionieren wie Strömungsbremsen bzw. Strömungsausbreitungshindernissse, die je den Luftstrom zwischen zwei benachbarten Zonen zu blockieren, so dass die in einer Zone temperierte Luft, insbesondere die erwärmte Luft, die dazu neigt, sich am Busdach 32 zu versammeln, möglichst viel in derselben Zone bleibt, aber nicht unerwünscht in eine benachbarte Zone strömt, die nicht klimatisiert werden sollte.

In einer nicht dargestellten Ausführungsform ist es vorgesehen, dass nach dem Einstieg des ersten Fahrgasts 9 durch die Anzeigevorrichtung 10 er sofort darauf hingewiesen wird, dass es für ihn empfehlenswert ist, zur Zone 2 zu gehen, die dem Fahrerbereich 1 am nächsten ist. Denn der Fahrerbereich 1 wird bereits bei der Fahrt klimatisiert, und die dortige temperierte Luft ist bereits zumindest ein wenig in die nächste Zone 2 geströmt. Wenn der erste Fahrgast 9 in die Zone 2 geht, könnte er sich erfindungsgemäß in der Anfangsphase der Klimatisierung im Vergleich zu den anderen Zonen 4, 6, 8 bequemer fühlen. Außerdem ist aufgrund der von dem Fahrerbereich 1 geströmten, vortemperierten Luft der Energieverbrauch für die Zone 2 weniger.

In einer weiteren nicht dargestellten Ausführungsform sind zusätzlich zu dem Monitor 10 oder anstelle des Monitors 10 Lichtbänder je an den Zonen 2, 4, 6, 8 angeordnet sind. Die klimatisierten Zonen werden durch die entsprechenden Lichtbänder z.B. in der Farbe Rot ausgeleuchtet.

## Patentansprüche

1. Omnibus (100) mit einem Fahrerbereich (1), mindestens einem Fahrgastraum (3) und einer Klimaanlage, wobei der Fahrgastraum mindestens zwei Zonen (2, 4, 6, 8) aufweist, und wobei die Klimaanlage mindestens je ein Modul für jede Zone (2, 4, 6, 8) aufweist, **dadurch gekennzeichnet, dass** der Omnibus (100) eine Steuervorrichtung, eine Anzeigevorrichtung (10) und eine Erfassungsvorrichtung (14) aufweist, die die Anzahl von Fahrgästen (9, 11, 13), welche sich in jeweiliger Zone (2, 4, 6, 8) befinden, erfasst, und dass basierend auf der erfassten Anzahl von Fahrgästen (9, 11, 13) die Steuervorrichtung die Klimaanlage und die Anzeigevorrichtung (10) derart steuert, dass die von den Fahrgästen (9, 11, 13) belegte Zone bzw. belegten Zonen (2, 4, 6, 8) je durch ein Modul der Klimaanlage klimatisiert wird bzw. werden und die klimatisierte Zone bzw. klimatisierten Zonen (2, 4, 6, 8) auf der Anzeigevorrichtung (10) angezeigt wird bzw. werden.

2. Omnibus nach Anspruch 1, dass durch die Steuervorrichtung auf der Anzeigevorrichtung (10) zur Empfehlung für Fahrgäste (9, 11, 13) ein Hinweis auf den Aufenthalt in der klimatisierten Zone (2, 4, 6, 8) angezeigt wird.

3. Omnibus nach Anspruch 1 oder 2, **dadurch gekennzeichnet, dass** durch die Steuervorrichtung die Module der Klimaanlage unabhängig voneinander steuerbar sind, wobei durch die Steuervorrichtung das Modul, in dessen entsprechender Zone (2, 4, 6, 8) mindestens ein Fahrgast (9, 11, 13) erfasst wurde, eingeschaltet wird, und das Modul, in dessen entsprechender Zone (2, 4, 6, 8) kein Fahrgast erfasst wurde, abgeschaltet wird.

4. Omnibus nach Anspruch 1 oder 2 oder 3, **dadurch gekennzeichnet, dass** durch die Steuervorrichtung die Echtzeit-Leistung jedes Moduls der Klimaanlage positiv korreliert mit der erfassten Anzahl von Fahrgästen (9, 11, 13) in jeder Zone (2, 4, 6, 8) änderbar ist.

5. Omnibus nach einem der vorhergehenden Ansprüche, **dadurch gekennzeichnet, dass**, nachdem ein Modul eingeschaltet wurde, durch die Steuerrichtung auf der Anzeigevorrichtung (10) die diesem Modul entsprechender Zone (2, 4, 6, 8) als klimatisiert angezeigt wird.

6. Omnibus nach einem der vorhergehenden Ansprüche, **dadurch gekennzeichnet, dass** die nicht klimatisierten Zonen (2, 4, 6, 8) auf der Anzeigevorrichtung angezeigt werden, welche auf der Anzeigevorrichtung von den klimatisierten Zonen (2, 4, 6, 8) unterscheidbar sind.

7. Omnibus nach einem der vorhergehenden Ansprüche, **dadurch gekennzeichnet, dass** jede Zone (2, 4, 6, 8) eine Belegungsrate zwischen null und 100 % entsprechend der Anzahl der in dieser Zone (2, 4, 6, 8) befindlichen Fahrgäste (9, 11, 13) hat, welche Belegungsrate basierend auf der erfassten Anzahl der in dieser Zone (2, 4, 6, 8) befindlichen Fahrgäste (9, 11, 13) durch die Steuervorrichtung berechnet wird.

8. Omnibus nach Anspruch 7, **dadurch gekennzeichnet, dass** beim Übersteigen der Belegungsrate einer ersten Zone von 30 %, insbesondere von 50%, durch die Steuervorrichtung und die Klimaanlage eine zweite Zone (2, 4, 6, 8), die nicht belegt ist, klimatisiert, insbesondere mit einer im Vergleich zu einer Soll-Leistung der Klimaanlage reduzierten Leistung klimatisiert, wird.

9. Omnibus nach Anspruch 8, **dadurch gekennzeichnet, dass** auf der Anzeigevorrichtung (10) die zweite Zone (2, 4, 6, 8) unterscheidbar von den belegten, klimatisierten Zonen (2, 4, 6, 8) und den nicht klimatisierten Zonen (2, 4, 6, 8), oder wie eine belegte, klimatisierte Zone (2, 4, 6, 8) angezeigt wird, und dass beim Belegen der zweiten Zone (2, 4, 6, 8) auf der Anzeigevorrichtung (10) die zweite Zone (2, 4, 6, 8) als belegte, klimatisierte Zone (2, 4, 6, 8) angezeigt wird, wobei insbesondere beim Belegen der zweiten Zone (2, 4, 6, 8) die Klimaanlage die zweite Zone (2, 4, 6, 8) mit der Soll-Leistung der Klimaanlage klimatisiert.

10. Omnibus nach einem der vorhergehenden Ansprüche, **dadurch gekennzeichnet, dass**, falls die Belegungsrate einer der Zonen (2, 4, 6, 8) auf null reduziert wird, die Steuervorrichtung die Klimaanlage steuert, das der Zone (2, 4, 6, 8) entsprechende Modul abzuschalten, und dass entsprechend auf der Anzeigevorrichtung (10) die Zone (2, 4, 6, 8) als nicht klimatisiert angezeigt wird.

11. Omnibus nach einem der vorhergehenden Ansprüche, **dadurch gekennzeichnet, dass** die Steuervorrichtung die Ist-Anzahl der in den Zonen (2, 4, 6, 8) befindlichen Fahrgäste (9, 11, 13) basierend auf einer innerhalb 10 Sekunden, insbesondere innerhalb 5 Sekunden, bevorzugt innerhalb 3 Sekunden, durchschnittlichen erfassten Anzahl der in den Zonen (2, 4, 6, 8) befindlichen Fahrgäste (9, 11, 13) bestimmt.

12. Omnibus nach einem der vorhergehenden Ansprüche, **dadurch gekennzeichnet, dass** der Omnibus (100) ein Kommunikationsgerät, insbesondere ein Mobiltelefon-Netz-Modul, aufweist, durch welches der Omnibus (100) mit dem Internet verbunden ist und die Informationen bezüglich der Anzahl der im Omnibus (100) und/oder in den einzelnen Zonen (2, 4, 6, 8) des Omnibusses (100) befindlichen Fahrgäste (9, 11, 13) über das Internet zugreifbar sind.

13. Omnibus nach einem der vorhergehenden Ansprüche, **dadurch gekennzeichnet, dass** die Erfassungsvorrichtung zur Erfassung der Anzahl von Fahrgästen (9, 11, 13) Sensoren (14), die insbesondere in/an den Sitzen (12) und/oder am Dach (32) und/oder am Boden und/oder an den Seitenfestern und/oder an den Armlehnen des Omnibusses (100) angeordnet sind, und/oder Lichtschranken, insbesondere unsichtbare Lichtschranken, umfasst.

14. Omnibus nach einem der vorhergehenden Ansprüche, **dadurch gekennzeichnet, dass** die Anzeigevorrichtung (10) mindestens einen Monitor und/oder LEDs und/oder Lichtbänder mit unterschiedlichen Farben aufweist.

15. Omnibus nach einem der vorhergehenden Ansprüche, **dadurch gekennzeichnet, dass** der Fahrgastraum mindestens vier Zonen (2, 4, 6, 8), insbesondere acht Zonen, aufweist und die nach dem Fahrerbereich (1) befindliche Zone (2) stets auf eine Soll-Temperatur klimatisiert wird.
